# EUROPÄISCHE PATENTSCHRIFT

(11) **EP 0 923 776 B1**
(45) Veröffentlichungstag und Bekanntmachung des Hinweises auf die Patenterteilung: **18.09.2002**
(21) Anmeldenummer: 97941830.8
(22) Anmeldetag: 27.08.1997
(51) Int. Cl.: G21C 19/317

(54) **VERFAHREN UND EINRICHTUNG ZUR EINLEITUNG EINER WASSERSTOFF-SAUERSTOFF-REAKTION IN EINEM REAKTOR-SICHERHEITSBEHÄLTER**
PROCESS AND DEVICE FOR INITIATING A HYDROGEN-OXYGEN REACTION IN A REACTOR SAFETY CONTAINER
PROCEDE ET DISPOSITIF POUR AMORCER UNE REACTION HYDROGENE-OXYGENE DANS UN RECIPIENT DE SECURITE D'UN REACTEUR

(30) Priorität: 09.09.1996 DE 19636555
(43) Veröffentlichungstag der Anmeldung: 23.06.1999
(73) Patentinhaber: Framatome ANP GmbH, 91050 Erlangen (DE)
(72) Erfinder: ECKARDT, Bernd, D-63486 Bruchköbel (DE); HILL, Axel, D-64589 Stockstadt (DE)
(74) Vertreter: Tergau & Pohl Patentanwälte
(86) Internationale Anmeldenummer: DE9701861
(87) Internationale Veröffentlichungsnummer: WO98011561

(56) Entgegenhaltungen:
- DE-A- 3 533 140
- DE-A- 19 530 749
- DE-C- 3 143 989
- FR-A- 2 501 529
- US-A- 3 873 440
- US-A- 4 762 093

## Beschreibung

Die Erfindung bezieht sich auf ein Verfahren und eine Einrichtung zur Einleitung einer Wasserstoff-Sauerstoff-Reaktion in einer katalytischen Rekombinations oder Zündeinrichtung die mindestens einen Katalysatorkörper mit vorgegebener katalytischer Oberfläche besitzt.

Katalytische Zündeinrichtungen sind beispielsweise aus der EP 0 303 144 A1 und der DE 30 04 677 A1 und katalytische Rekombinations-Einrichtungen sind beispielsweise aus der EP 0 527 968 A1 bekannt. Aus der JP-A-07 019 035 ist ein partiell beheizbarer Katalysator bekannt, dessen Volumen in aktiv beheizte und nicht aktiv beheizte Bauelemente unterteilt ist.

Nach einem Störfall mit Kühlmittelverlust in einem Kernkraftwerk können große Mengen an Wasserstoff H₂ und Kohlenmonoxid CO in den Sicherheitsbehälter freigesetzt werden. Ohne Gegenmaßnahmen wäre die Wasserstoff Anreicherung in der Atmosphäre des Sicherheitsbehälters (Containment) unter Umständen so weit möglich, daß sich ein detonationsfähiges Gemisch ausbilden könnte. Bei einer späten zufälligen Zündung könnte vor allem durch die Verbrennung einer größeren Menge an Wasserstoff die Integrität des Sicherheitsbehälters gefährdet werden. Das Bestreben geht deswegen dahin, zur Beseitigung des Wasserstoffs und des Kohlenmonoxids aus der Atmosphäre des Sicherheitsbehälters durch Rekombination mit Sauerstoff O₂ eine Rekombinations oder Zündeinrichtung zu entwickeln und zu optimieren, die frühzeitig startet. Eine solche Einnchtung soll auch bei längerer Standzeit in der Atmosphäre des Sicherheitsbehälters nicht wesentlich an Aktivität verlieren.

Sie soll auch in der Lage sein, völlig passiv bei niedrigen Umgebungstemperaturen zu starten. Mit anderen Worten: Es soll möglich sein, eine katalytische Rekombinations- oder Zündeinrichtung auch bei Störfällen mit niedrigen Umgebungstemperaturen, z.B. bei TMI-Störfallsituationen mit Betrieb der Lüftung und resultierenden Umgebungstemperaturen von nur 30° C oder aber unter Icecondenser-Bedingungen von z.B. 10° C und weniger, startschnell und passiv zu betreiben. Wenn ein rechtzeitiger passiver Abbau des Wasserstoffs möglich ist, wird die Sicherheit des Kernkraftwerks entscheidend erhöht.

Übliche katalytische Rekombinations- oder Zündeinrichtungen arbeiten mit Katalysatorelementen auf Platin- und/oder Palladiumbasis. Auch bei Vorliegen von reversiblen Katalysatorgiften soll die Reaktionsstartsicherheit entscheidend erhöht werden.

Die aus der EP 0 527 968 C1 bekannte Rekombinations-Einrichtung zur Rekombination von Wasserstoff und Sauerstoff umfaßt nach einer Ausführungsform eine Mehrzahl von zueinander parallel angeordneten Katalysatorplatten in einem Gehäuse. Dieses Gehäuse besitzt eine Einström- und eine Ausströmöffnung derart, daß die parallel zueinander ausgerichteten Katalysatorplatten vom Gas-/Dampfgemisch, das den zu beseitigenden Wasserstoff im Störfall enthält, parallel durchströmt werden. Diese Einrichtung ist insbesondere für den Einsatz nach schweren Störfällen gedacht, bei denen mit Temperaturen von über 50° C in der Atmosphäre des Sicherheitsbehälters gerechnet werden muß. Wünschenswert wäre es, eine solche Einrichtung so auszugestalten, daß sie auch bei niedrigeren Temperaturen zuverlässig startet.

Während die soeben genannte Einrichtung Platin und Palladium-Katalysator-Einrichtungen beschreibt, sind im Stand der Technik andere Ausgestaltungen bekannt. Beispielsweise sind in der DE 36 04 416 C2 Edelmetallmischungen beschrieben, die homogen verteilt sind. Es können auch z.B. mehrere Edelmetallfolien (Pd + V + Pd) auf einen Aluminium-Trägerkörper in Sandwich-Bauform aufgebracht und in Spiralen gewickelt sein. Auch sind in der EP 0 301 536 A2 Einrichtungen beschrieben, bei denen eine Palladiumlegierung (mit geringer Ansprechzeit bis zur katalytischen Reaktion) eingesetzt wird. Die Palladiumlegierung enthält zumindest 80 Gew.-% Pd, maximal bis zu 19,9 Gew.-% eines weiteren Metalls der 8. Gruppe des Periodischen Systems, insbesondere Nickel, und maximal 10 Gew.-% Kupfer.

Andere Katalysatormischungen können infolge der großen mikroskopischen Ferne der sensitiven Palladium-Zentren von den überwiegend vorhandenen giftresistenten Platin-Zentren nicht ausreichende Reaktionsraten bei den hier betrachteten niedrigen Temperaturen erzeugen, so daß ein Anspringen der Platin-Zentren nicht erreicht werden kann.

Die vorbeschriebenen Einrichtungen können nach dem Stand der Technik zur Vermeidung von Desaktivierung noch mit Filtern ausgestattet oder auch in geschlossenen Behältern gelagert werden, die im Anforderungsfall geöffnet werden. Solche Zusatzeinrichtungen vermeiden oder reduzieren zwar die Katalysatoralterung, sie sind jedoch kostenintensiv, kompliziert und nur schwierig gegen andere Anforderungen, wie z.B. Erdbeben, auszulegen.

Aus der DE 31 43 989 C ist es bekannt, eine Rekombinations-Einrichtung zu verwenden, die insgesamt einen Behälter und eine elektrische Heizung umfaßt. Einzelheiten des Aufbaus sind in dieser Druckschrift nicht angegeben.

Aufgabe der Erfindung ist es demnach, ein Verfahren und eine Einrichtung zur frühzeitigen Einleitung einer Wasserstoff-Sauerstoff-Reaktion in einer katalytischen Rekombinationsoder Zündeinrichtung anzugeben, mit denen ein rechtzeitiger passiver Abbau des Wasserstoffs möglich und damit die Sicherheit erhöht wird. Die Einrichtung soll insbesondere in innerhalb des Sicherheitsbehälters eines Kernkraftwerks angebrachten katalytischen Zünd- oder Rekombinations-Einrichtungen, die vornehmlich unter Verwendung der Edelmetalle Palladium und Platin arbeiten, unter schwierigsten Unfallbedingungen sicher arbeiten.

Bezüglich des Verfahrens wird die genannte Aufgabe erfindungsgemäß dadurch gelöst, daß ein geringer Teil der insgesamt vorhandenen katalytischen Oberfläche, vorzugsweise weniger als 5% dieser Oberfläche, durch Einleitung von Energie permanent auf einem Temperaturniveau, das gegenüber dem der Umgebung erhöht ist, gehalten wird.

Bezüglich der Einrichtung wird die genannte Aufgabe erfindungsgemäß dadurch gelöst, daß eine Energieeinspeisevorrichtung vorgesehen ist, mit der ein geringer Teil der insgesamt vorhandenen katalytischen Oberfläche, vorzugsweise weniger als 5% der Oberfläche, durch Einleitung von Energie permanent auf einem Temperaturniveau, das gegenüber der Umgebung erhöht ist, haltbar ist.

Durch die Einspeisung von Energie und damit verbundene Temperaturanhebung auf ein Temperaturniveau, das über demjenigen der Umgebung liegt, werden günstige Reaktionsbedingungen für die Wasserstoff-Sauerstoff-Reaktion geschaffen. In dem besagten geringen Teil der Oberfläche wird im Störfall infolge der erhöhten Oberflächen-Temperatur der Ablauf der besagten Reaktion initiiert. Durch weitere Maßnahmen, die in den Unteransprüchen gekennzeichnet sind, ist sichergestellt, daß sich die Initialreaktion besonders schnell auf die gesamte Oberfläche ausbreiten kann.

Vorteilhafterweise wird die Energie aus einem lokalen, d.h. in der Nähe der katalytischen Oberfläche angeordneten Energiespeicher bezogen, bevorzugt aus einer Batterie. Somit wird selbst bei störfallbedingtem Ausfall der Kraftwerks-Stromversorgung und beim Vorliegen geringer Temperaturen von z.B. unter 10° C, bei geringen Wasserstoff-Konzentrationen von z.B. weniger als 2 Vol.-%, bei hochkontaminierter Atmosphäre, bei Feuchte, usw. ein völlig passiver Start der katalytischen Reaktion ermöglicht. Durch Ableitung von Reaktionswärme in benachbarte katalytische Oberflächen wird eine Aktivierung der kompletten katalytischen Zünd- oder Rekombinations-Einrichtung ermöglicht. Somit kann eine rechtzeitige Oxidation des Wasserstoffs erfolgen, bevor kritische Konzentrationsgrenzwerte erreicht werden. Damit wird eine entscheidende Erhöhung der Sicherheit bei einem Kernkraftwerk erreicht.

Mit anderen Worten: Durch den permanent temperierten katalytischen Teil gelingt es, daß diese Katalysatorzone sich bei Freisetzung von Wasserstoff durch die unmittelbar startende exotherme Reaktion spontan weiter aufheizt und eine sich selbst unterstützende katalytische Reaktion in Gang bringt. Diese Reaktion wird, gegebenenfalls unterstützt über eingebrachte metallische Leiter, in die benachbarten Katalysatorteile transportiert. Hier ermöglicht sie einen globalen Reaktionsbeginn.

Durch die partielle Beheizung mittels eines unabhängigen Energiespeichersystems und die Kombination der angegebenen Maßnahmen können Alterungseffekte, hervorgerufen durch den Einsatz in der Kernkraftwerks-Atmosphäre, wie z.B. durch Sorption von Kohlenwasserstoffen und Schweißdämpfen, Aerosolbelastung usw. - ohne den sonst nach kurzer Stand-by-Zeit auftretenden Verlust der sicherheitswichtigen Selbststarterfunktion - über lange Betriebsräume von vielen Jahren kompensiert werden. Diese Betriebsräume können fünf und mehr Jahre umfassen. Somit wird die Sicherheit entscheidend erhöht, und gleichzeitig werden die Kosten reduziert, da ein zyklischer Austausch der einzelnen Katalysatorkörper unnötig wird.

Ausführungsbeispiele der Erfindung werden im folgenden anhand von acht Figuren näher erläutert. Es zeigen:
- FIG 1: den Ausschnitt einer katalytischen Rekombinations-Einrichtung im Blick von oben;
- FIG 2: eine abgewandelte Ausführungsform der Anordnung der Heizeinrichtung;
- FIG 3: eine Ausführungsform unter Verwendung von Wärmeleitern;
- FIG 4: die externe und interne Elektro-Versorgung der Heizung in einem Kernkraftwerk;
- FIG 5: eine dezentrale störfallfeste Energieversorgung;
- FIG 6: die Heizung mittels eines Wärmespeichers;
- FIG 7: ein beheizbares Katalysatorelement; und
- FIG 8: einen Heizleiter, der parallel zu einer Katalysator-Platte angeordnet ist.

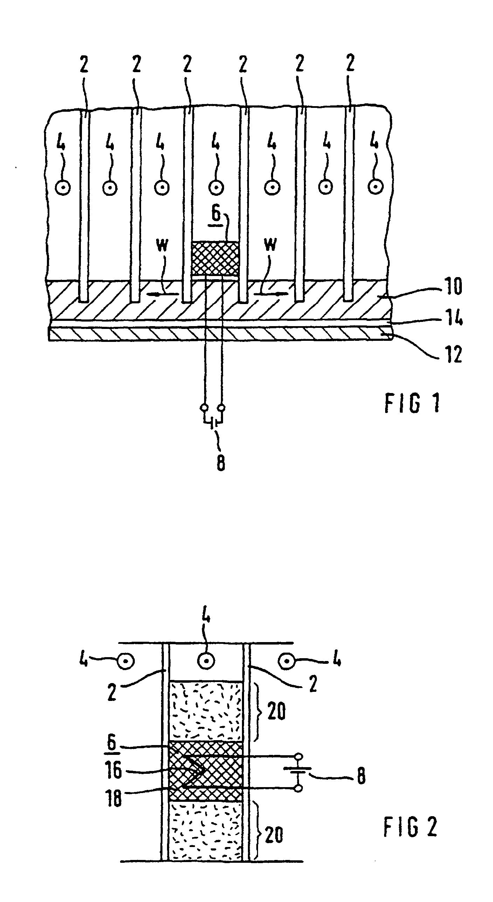

Figur 1 zeigt einen Blick von oben auf die katalytische Rekombinations-Einrichtung. Somit tritt das zu rekombinierende Gas von unten aus der Papierebene heraus. Dies ist durch eingekreiste Punkte 4 angedeutet. Zwischen den beiden mittleren Katalysatorkörpern 2 befindet sich im vorderen Bereich eine elektrische Heizeinrichtung 6, also eine permanent beheizte katalytisch aktive Zone. Bei der Heizeinrichtung 6 kann es sich um einen kleinen Heizkörper, wie einen Heizstab, ein Filament oder ein anderes Heizelement handeln. Diese elektrische Heizeinrichtung 6 wird von einer Energiequelle 8, beispielsweise von einem lokalen Energiespeicher wie einer Batterie, gespeist. Die Heizeinrichtung 6 ist so eingerichtet, daß sie Wärmeenergie an die beiden benachbarten Katalysatorkörper 2 (in der Mitte der Zeichnung gezeigt) abgibt. Die Wärmeweiterleitung ist mit w bezeichnet. Volumen und Heizleistung sind so bemessen, daß ein nur geringer Teil der insgesamt vorhandenen katalytischen Oberfläche, vorzugsweise weniger als 5% der Oberfläche, durch Einleitung von Wärmeenergie permanent auf einem Temperaturniveau gehalten wird, das gegenüber demjenigen der Umgebung erhöht ist. Die permanente Beheizung des zentralen Flächenteiles erfolgt so, daß innerhalb dieser Zone Temperaturen von größer als 50° C, vorteilhaft von mehr als 80° C, eingehalten werden. Somit wird die als Aging bekannte Reduktion der katalytischen Aktivität, die bei erhöhten Temperaturen entscheidend reduziert wird, über die Zeit, z.B. durch Sorption von Schadstoffen aus der Containment-Atmosphäre im laufenden Betrieb des Kernkraftwerks, entscheidend minimiert.

Nach Figur 1 umfaßt die Rekombinations-Einrichtung eine Vielzahl von parallel zueinander ausgerichteten Katalysatorplatten oder Katalysatorkörpern 2, die in bekannter Weise (EP 0 527 968 C1) jeweils aus einer Grundplatte aus Stahlblech und beidseitig aufgetragenem katalytischen Material wie Platin und Palladium, bestehen. Die Anordnung der einzelnen Katalysatorkörper 2, die insgesamt eine vorgegebene katalytische Oberfläche besitzen, ist form- und kraftschlüssig in einem metallischen Träger 10 vorgenommen. Sie besitzen einen Blechabstand von weniger als 2 cm, vorzugsweise von etwa 1 cm. Eine Einhaltung des Abstands zwischen den Katalysatorblechen im Rahmen dieser Werte ist wünschenswert, da aufgrund der laminaren Strömungszustände zwischen den plattenförmigen Katalysatorkörpern 2 nur ein ungenügender Wärmeübertrag durch Konvektion gelingt und die Wärme primär durch Strahlung übertragen wird. Durch die kraftschlüssige Verbindung mit mehr als 0,1 kp zwischen dem einzelnen Katalysatorkörper 2 (Dicke etwa 0,05 mm) und dem Träger 10 ergibt sich, nach dem Start des Katalysators, eine direkte Wärmeweiterleitung in den Nachbar-Katalysatorkörper 2.

Die Wärmeweiterleitung im metallischen Träger 10 ist durch die horizontalen Pfeile w gekennzeichnet.

Um Kühleinflüsse durch die Umgebung klein zu halten, ist zwischen der Gehäusewand 12 und dem metallischen Träger 10 ein nicht durchströmter isolierender Luftspalt 14 vorgesehen. Dieser kann eine Breite von mehr als 5 mm besitzen. Statt eines Luftspalts 14 kann auch eine massive Isolierschicht vorgesehen sein. Durch den Luftspalt 14 werden die Rekombinator-Außentemperaturen reduziert, so daß bei nicht gewollter Zündung und höheren Wasserstoff-Konzentrationen von z.B. 8 bis 10 Vol.-% ein Betrieb der Einrichtung ohne Zündung möglich wird.

Nach Figur 2 ist zwischen zwei Katalysatorkörpern 2 einer katalytischen Rekombinations-Einrichtung wiederum ein elektrisch beheizbarer Heizkörper 6 angeordnet. Dieser Heizkörper 6 besteht im wesentlichen aus einer Heizwendel 16, die von der Energiequelle 8 versorgt wird, und einem darum herum liegenden Drahtgestrick 18, das ein guter Wärmeleiter ist und die von der Heizwendel 16 permanent erzeugte Wärme an die beiden Katalysatorkörper 2 weiterleitet. Zu diesem Zweck liegt das Drahtgestrick 18 fest an der Oberfläche der beiden plattenförmigen Katalysatorkörper 2 an. Statt dessen kann auch hier wieder ein katalytisch beheizbares Element 16 oder 18 verwendet werden. Der Heizkörper 6 ist beidseitig von Filterkörpern 20 eingefaßt. Diese Filterkörper 20 bestehen aus einem metallischen Filtervlies und/oder Sorptionsmedium, wie z.B. Aktivkohle oder Zeolith. Durch solche Filterkörper 20 kann der Anfall von aerosol- und/oder gasförmigen Schadstoffen in dieser sensitiven Zone klein gehalten werden.

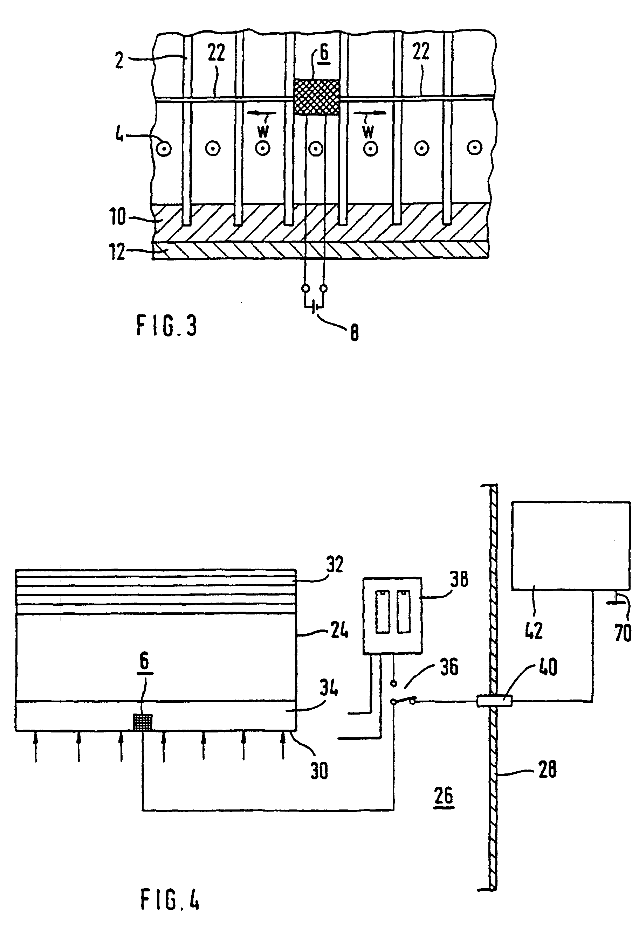

In Figur 3 ist gezeigt, daß von der durch die Heizeinrichtung 6 erwärmten Zone auf den beiden benachbarten Katalysatorkörpern 2 Wärme an weitere Katalysatorkörper 2 weitergeleitet wird. Hierzu dienen Wärmetransportelemente 22, die insbesondere stangen- oder plattenförmig ausgebildet sind und aus Metall bestehen. Sie können sich über mehrere Katalysatorkörper 2 erstrecken. Die Wärmeleitung ist auch hier durch Pfeile w gekennzeichnet.

In Figur 4 ist eine Rekombinationseinrichtung 24 gezeigt, die innerhalb eines Reaktorsicherheitsbehälters 26 angeordnet ist. Dessen Containment-Wand ist mit 28 bezeichnet. Die Rekombinations-Einrichtung 24 ist insbesondere so aufgebaut, wie sie in der EP 0 527 968 C gezeigt und beschrieben ist. Allerdings werden hier parallel zueinander ausgerichtete Platten 2 eingesetzt. Die Eintrittsöffnung ist mit 30 und die senkrecht dazu angeordnete Austrittsöffnung ist mit 32 markiert. Die parallel zueinander ausgerichteten plattenförmigen Katalysatorkörper 2 befinden sich im unteren Bereich 34. Hier ist auch der Heizkörper 6 untergebracht. Er wird über einen Umschalter oder ein Schaltelement 36 entweder von einer internen Elektro-Versorgungseinheit 38 für den Störfall oder über eine Durchführung 40 in der Wand 28 von einer externen Elektro-Versorgungseinheit 42 für den Normalbetrieb versorgt. Der Umschalter 36 ist derart betätigbar, daß erst bei Ausfall der zentralen Stromversorgungseinheit 42 von dieser auf die lokale Elektro-Versorgungseinheit 38 umgeschaltet wird.

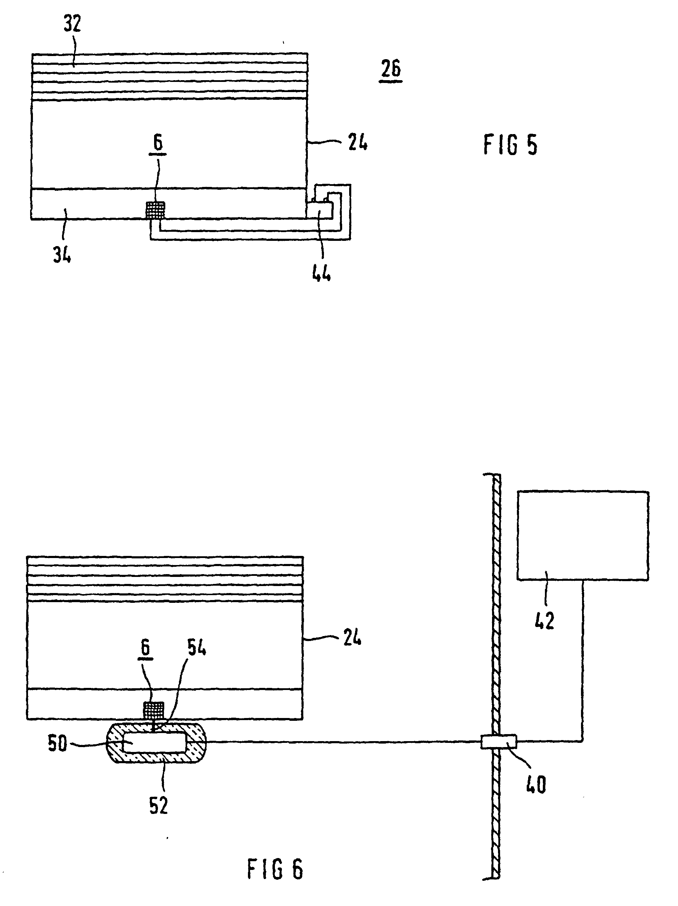

Aus Figur 5 wird deutlich, daß das Heizelement 6 in der Rekombinations-Einrichtung 24 von einer strahlenbeständigen Batterie 44, die in oder direkt neben der Einrichtung 24 angeordnet ist, permanent versorgt wird. Hier handelt es sich also um eine dezentrale störfallfeste Energieversorgung, wobei die Batterie 44 als lokaler Energiespeicher angesprochen werden kann.

Zu Figur 4 und 5 ist noch folgendes zu sagen: Durch die partielle Beheizung wird der erforderliche Energiebedarf - insbesondere in Störfallsituationen - so weit minimiert, beispielsweise auf weniger als 100 W, vorzugsweise auf weniger als 10 W, daß die Energieeinleitung aus dem Energiespeicher 38, 44 über einen Zeitraum von mehreren Stunden möglich ist.

Der innerhalb des Reaktor-Sicherheitsbehälters 26 angeordnete Energiespeicher besteht nach Figur 5 aus einer oder mehreren separaten elektrischen Batterien 44, die bei Ausfall der Stromversorgung über einen definierten Zeitraum von mehr als zwei Stunden, vorzugsweise von mehr als 24 Stunden, automatisch in Betrieb gehen und die Beheizung und Temperierung der aktiven Katalysatorzone aufrechterhalten.

Nach Figur 6 ist die Rekombinations-Einrichtung 24 mit einer Speichereinrichtung 50 für Wärme versehen. Diese enthält ein flüssiges oder festes Wärmespeichermaterial. Die Speichereinrichtung 50 ist mittels einer elektrischen Widerstandsheizung (nicht dargestellt) permanent auf erhöhter Temperatur von mehr als 200° C, vorzugsweise mehr als 400° C, gehalten. Dies geschieht von der externen Elektro-Versorgungseinrichtung 42 aus. Der Speicher 50 ist hierbei zur Geringhaltung der Wärmeverluste mit einer störfallfesten Isolierung 52 umgeben, insbesondere einer Vakuum- oder Feststoffisolierung. Der Wärmetransport aus dem Wärmespeicher 50 zum Heizelement 6 in der Einheit 24 erfolgt über direkte Wärmeleitung, und zwar über ein isoliertes Wärmetransportelement 54, z.B. eine Metallstange. Falls die Versorgungsleitung zwischen der Widerstandsheizung im Wärmespeicher 50 und der externen Versorgung 42 unterbrochen ist, reicht die gespeicherte Wärme aus, um ine vorgegebene geringe Fläche der katalytischen Oberfläche auf erhöhter Temperatur zu halten, und zwar über Stunden hinweg. Die Anordnung des passiven Initialzünder-Katalysatorteils erfolgt auch hier entgegen der Strömungsrichtung im tiefergelegenen Teil oder Bereich 34 der Einrichtung 24.

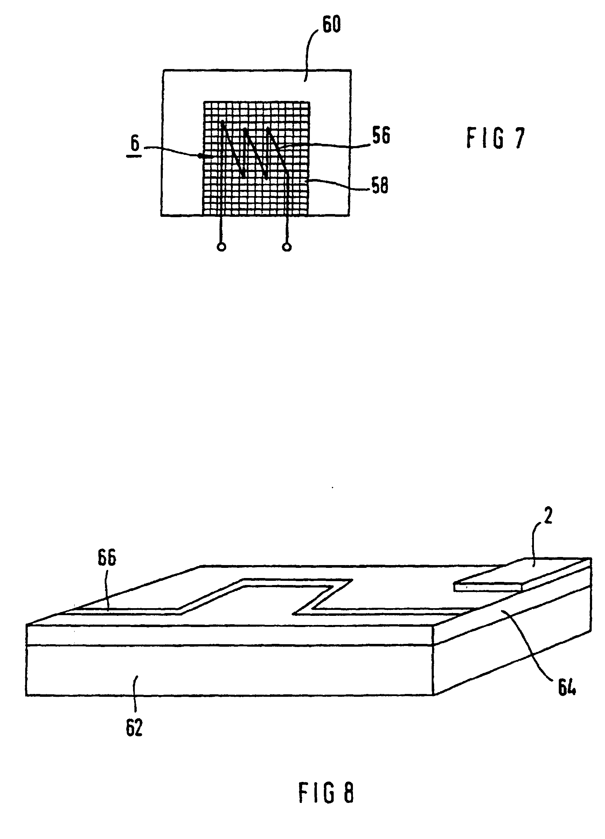

In Figur 7 ist ein beheizbares Heizelement 6 dargestellt, das eine Heizwendel 56 oder ein katalytisch beschichtetes Filament sowie ein Drahtgeflecht 58 oder ein katalytisch beschichtetes Filtervlies umfaßt. Letzteres liegt auf einer Befestigung oder Halterung 60 oder direkt auf dem ebenen Katalysatorkörper 2.

Aus Figur 8 wird deutlich, daß das elektrisch beheizte Heizelement 6 mehr oder weniger in den Katalysatorkörper 2 integriert sein oder direkt an diesem anliegen kann. Letzteres ist hier gezeigt. Ein Trägerkörper 62 von Plattenform, insbesondere eine austenitische Metallfolie, ist von einer elektrischen Isolierschicht 64 bedeckt. In letzterer ist eine zur elektrischen Heizung vorgesehene zick-zack-förmige Leiterbahn 66 untergebracht. Auf der Isolierschicht 64 liegt der plattenförmige Katalysatorkörper 2, von dem nur ein Teilstück der besseren Übersichtlichkeit wegen gezeigt ist. Der Katalysatorkörper 2 ist hier wieder eine dünne Edelmetall-Platte, die oben mit einer Katalysatorschicht auf der Basis Pd/Pt belegt ist.

Durch den relativ geringen Energiebedarf der in den Figuren 1 bis 8 dargestellten Einrichtung ist eine Kombination mit der Versorgung von anderen notstromversorgten Meßeinrichtungen im Reaktor-Sicherheitsbehälter, wie z.B. mit der Versorgung der H₂-Messung, möglich. Das bedeutet einen vergleichsweise geringen Aufwand.

Zur Wiederherstellung der katalytischen Aktivität kann zusätzlich eine (zyklische oder auch z.B. im Rahmen von Wiederholungsprüfungen von Hand auszulösende) kurzzeitige Hochtemperaturphase von mehr als 200° C ausgelöst werden, z.B. mittels des Auslösers 70 in Figur 4. Hierdurch wird eine sehr wirkungsvolle Reaktivierung des beheizten katalytischen Teils im Bereich des Heizelements 6 erreicht, so daß im laufenden Betrieb eine Beheizung auf deutlich niedrigerem Niveau ausreicht, da reversible Katalysatorgifte qualitativ adsorbiert werden.

## Patentansprüche

1. Verfahren zur Einleitung einer Wasserstoff-Sauerstoff-Reaktion in einer katalytischen Rekombinations- oder Zündeinrichtung, die mindestens einen Katalysatorkörper (2) mit vorgegebener katalytischer Oberfläche besitzt,
**dadurch gekennzeichnet, daß** ein Teil der insgesamt vorhandenen katalytischen Oberfläche durch Einleitung von Energie permanent auf einem Temperaturniveau, das gegenüber dem der Umgebung erhöht ist, gehalten wird.

2. Verfahren nach Anspruch 1,
**dadurch gekennzeichnet, daß** der auf erhöhtem Temperaturniveau gehaltene Teil weniger als 5% der Oberfläche des Katalysatorkörpers (2) beträgt.

3. Verfahren nach Anspruch 1 oder 2,
**dadurch gekennzeichnet, daß** die Energie aus einem lokalen Energiespeicher (8, 38, 44), bevorzugt aus einer Batterie, bezogen wird.

4. Verfahren nach einem der Ansprüche 1 bis 3,
**dadurch gekennzeichnet, daß** die Einleitung der Energie durch permanentes Heizen einer elektrischen Heizeinrichtung (6) oder einer katalytisch aktiven Zone vorgenommen wird.

5. Verfahren nach einem der Ansprüche 1 bis 4,
**dadurch gekennzeichnet, daß** die Rekombinations- oder Zündeinrichtung (24) im Containment (26) eines Kernkraftwerks untergebracht ist.

6. Verfahren nach einem der Ansprüche 1 bis 5,
**dadurch gekennzeichnet, daß** der besagte geringe Teil der Oberfläche auf einer Temperatur von mehr als 50° C, vorzugsweise von mehr als 80° C, gehalten wird.

7. Verfahren nach einem der Ansprüche 3 bis 6,
**dadurch gekennzeichnet, daß** die Energie aus einer zentralen Stromversorgungseinrichtung (42) und erst bei Ausfall dieser zentralen Stromversorgungseinrichtung (42) aus dem lokalen Energiespeicher (8, 38, 44) bezogen wird.

8. Verfahren nach einem der Ansprüche 1 bis 7,
**dadurch gekennzeichnet, daß** der besagte geringe Teil der Oberfläche von einer Speichereinrichtung (50) mit flüssigem oder festem Energiespeichermaterial über ein Wärmetransportelement (54)permanent auf dem genannten Temperaturniveau gehalten wird, wobei die Speichereinrichtung (50) ihrerseits mittels einer Heizung dauerhaft auf einer erhöhten Temperatur, wie insbesondere von mehr als 200° C, gehalten wird.

9. Verfahren nach einem der Ansprüche 1 bis 8, **dadurch gekennzeichnet, daß** die Wasserstoff-Sauerstoff-Reaktion in einem Sicherheitsbehälter eines Kernkraftwerks eingeleitet wird.

10. Einrichtung zur Einleitung einer Wasserstoff-Sauerstoff-Reaktion in einer katalytischen Rekombinations- oder Zündeinrichtung, die eine Anzahl von Katalysatorkörpern (2) mit vorgegebener katalytischer Oberfläche besitzt,
**dadurch gekennzeichnet, daß** eine Energieeinspeisevorrichtung (6, 8, 38, 42, 44) vorgesehen ist, mit der ein Teil der insgesamt vorhandenen katalytischen Oberfläche durch Einleitung von Energie permanent auf einem Temperaturniveau, das gegenüber der Umgebung erhöht ist, haltbar ist.

11. Einrichtung nach Anspruch 10, **dadurch gekennzeichnet, daß** der auf erhöhtem Temperaturniveau gehaltene Teil weniger als 5% der Oberfläche des Katalysatorkörpers (2) beträgt.

12. Einrichtung nach Anspruch 10 oder 11,
**dadurch gekennzeichnet, daß** die Energieeinspeisevorrichtung (6, 8, 38, 42, 44) eine elektrische Energiequelle (38, 42, 44) einerseits und eine elektrische Heizeinrichtung (6) oder eine katalytisch aktive Zone andererseits umfaßt.

13. Einrichtung nach Anspruch 12,
**dadurch gekennzeichnet, daß** die Energieeinspeisevorrichtung (6, 8, 44) einen lokalen Energiespeicher (8, 44), insbesondere eine Batterie, umfaßt.

14. Einrichtung nach Anspruch 13,
**dadurch gekennzeichnet, daß** die Energieeinspeisevorrichtung (6, 8, 38, 42, 44) eine zentrale Stromversorgungseinrichtung (42) und einen Umschalter (36) umfaßt, der derart betätigbar ist, daß erst bei Ausfall der zentralen Stromversorgungseinrichtung (42) von dieser auf den lokalen Energiespeicher (8, 38, 44) umgeschaltet wird.

15. Einrichtung nach einem der Ansprüche 10 bis 14,
**dadurch gekennzeichnet, daß** der heizbare Teil der katalytischen Oberfläche zentral angeordnet ist.

16. Einrichtung nach einem der Ansprüche 10 bis 15,
**dadurch gekennzeichnet, daß** mindestens ein Wärmeleiter (22), der vorzugsweise metallisch ausgebildet ist, vom besagten geringen Teil der Oberfläche zu einem anderen Teil der Oberfläche führt.

17. Einrichtung nach einem der Ansprüche 10 bis 15,
**dadurch gekennzeichnet, daß** die Energieeinspeisevorrichtung (42) eine Speichereinrichtung (50) mit flüssigem oder festem Energiespeichermaterial umfaßt, welche über ein Wärmetransportelement (54) mit dem besagten geringen Teil der Oberfläche thermisch verbunden ist.

18. Einrichtung nach Anspruch 17,
**dadurch gekennzeichnet, daß** zum Heizen der Speichereinrichtung (54) eine Heizeinrichtung (6) vorgesehen ist, die vorzugsweise als elektrische Widerstandsheizung ausgebildet ist.

19. Einrichtung nach Anspruch 17 oder 18,
**dadurch gekennzeichnet, daß** die Speichereinrichtung (50) ein von einer Isolierung (52) umgebener Wärmespeicher ist.

20. Einrichtung nach einem der Ansprüche 10 bis 19,
**dadurch gekennzeichnet, daß** die elektrische Heizeinrichtung (6) eine permanent beheizte Heizwendel (16) besitzt.

21. Einrichtung nach einem der Ansprüche 10 bis 20,
**dadurch gekennzeichnet, daß** die elektrische Heizeinrichtung (6) ein Heizkörper ist, der zwischen zwei benachbarten Katalysatorkörpern (2) angeordnet ist.

22. Einrichtung nach einem der Ansprüche 10 bis 21,
**dadurch gekennzeichnet, daß** die Heizeinrichtung (6) eine Heizleiterbahn (66) umfaßt, die parallel zu dem als Platte ausgebildeten Katalysatorkörper (2) angeordnet ist.

23. Einrichtung nach einem der Ansprüche 11 bis 22,
**dadurch gekennzeichnet, daß** die Heizeinrichtung (6) und die Katalysatorkörper (2) in einem Gehäuse (24) untergebracht sind.

## Claims

1. A process for initiating a hydrogen-oxygen reaction in a catalytic recombination device or ignition device which possesses at least one catalyst body (2) with a predetermined catalytic surface,
**characterised in that** as a result of introducing energy a part of the catalytic surface that is present overall is maintained permanently at a temperature-level that is elevated in comparison with the environment.

2. Process according to Claim 1,
**characterised in that** the part that is maintained at an elevated temperature-level amounts to less than 5% of the surface of the catalyst body (2).

3. Process according to Claim 1 or 2,
**characterised in that** the energy is drawn from a local energy store (8, 38, 44), preferably from a battery.

4. Process according to one of Claims 1 to 3,
**characterised in that** the energy is introduced by permanent heating of an electrical heating device (6) or of a catalytically active zone.

5. Process according to one of Claims 1 to 4,
**characterised in that** the recombination device or ignition device (24) is accommodated in the containment (26) of a nuclear power station.

6. Process according to one of Claims 1 to 5,
**characterised in that** said small part of the surface is maintained at a temperature of more than 50° C, preferably more than 80° C.

7. Process according to one of Claims 3 to 6,
**characterised in that** the energy is drawn from a central power-supply device (42) and is drawn from the local energy store (8, 38, 44) only in the event of failure of said central power-supply device (42).

8. Process according to one of Claims 1 to 7,
**characterised in that** said small part of the surface is maintained permanently at the stated temperature-level by a storage device (50) with liquid or solid energy-storing material via a heat-transfer element (54), the storage device (50) being in turn maintained permanently at an elevated temperature such as, in particular, more than 200° C by means of a heater.

9. Process according to one of Claims 1 to 8,
**characterised in that** the hydrogen-oxygen reaction is initiated in a containment vessel of a nuclear power station.

10. A device for initiating a hydrogen-oxygen reaction in a catalytic recombination device or ignition device which possesses a number of catalyst bodies (2) with a predetermined catalytic surface,
**characterised in that** an energy-feeding device (6, 8, 38, 42, 44) is provided, with which, as a result of introducing energy, a part of the catalytic surface that is present overall is capable of being maintained permanently at a temperature-level that is elevated in comparison with the environment.

11. Device according to Claim 10, **characterised in that** the part that is maintained at an elevated temperature-level amounts to less than 5% of the surface of the catalyst body (2).

12. Device according to Claim 10 or 11,
**characterised in that** the energy-feeding device (6, 8, 38, 42, 44) comprises an electrical energy source (38, 42, 44), on the one hand, and an electrical heating device (6) or a catalytically active zone, on the other hand.

13. Device according to Claim 12,
**characterised in that** the energy-feeding device (6, 8, 44) comprises a local energy store (8, 44), in particular a battery.

14. Device according to Claim 13,
**characterised in that** the energy-feeding device (6, 8, 38, 42, 44) comprises a central power-supply device (42) and a change-over switch (36) which is capable of being actuated in such a way that only in the event of failure of the central power-supply device (42) is a change-over undertaken from said power-supply device to the local energy store (8, 38, 44).

15. Device according to one of Claims 10 to 14,
**characterised in that** the heatable part of the catalytic surface is arranged centrally.

16. Device according to one of Claims 10 to 15,
**characterised in that** at least one heat-conductor (22) which is preferably of metallic construction leads from said small part of the surface to another part of the surface.

17. Device according to one of Claims 10 to 15,
**characterised in that** the energy-feeding device (42) comprises a storage device (50) with liquid or solid energy-storing material which is thermally connected to said small part of the surface via a heat-transfer element (54).

18. Device according to Claim 17,
**characterised in that** a heating device (6) which preferably takes the form of an electrical resistance heater is provided for the purpose of heating the storage device (54).

19. Device according to Claim 17 or 18,
**characterised in that** the storage device (50) is a heat-accumulator surrounded by an insulation (52).

20. Device according to one of Claims 10 to 19,
**characterised in that** electrical heating device (6) possesses a permanently heated heating coil (16).

21. Device according to one of Claims 10 to 20,
**characterised in that** the electrical heating device (6) is a heating element which is arranged between two adjacent catalyst bodies (2).

22. Device according to one of Claims 10 to 21,
**characterised in that** the heating device (6) comprises a heating conductor track (66) which is arranged parallel to the catalyst body (2) which takes the form of a plate.

23. Device according to one of Claims 11 to 22,
**characterised in that** the heating device (6) and the catalyst bodies (2) are accommodated in a housing (24).

## Revendications

1. Procédé pour amorcer une réaction hydrogène-oxygène dans un dispositif de recombinaison ou d'allumage catalytique, qui est constitué d'au moins un corps (2) de catalyseur comportant une surface catalytique donnée à l'avance, **caractérisé en ce qu'**une partie de la surface catalytique globalement présente est maintenue par envoi d'énergie de manière permanente à un niveau de température qui est élevé par rapport à celui de l'extérieur.

2. Procédé suivant la revendication 1, **caractérisé en ce que** la partie maintenue à un niveau de température élevé correspond à moins de 5 % de la surface du corps (2) de catalyseur.

3. Procédé suivant la revendication 1 ou 2, **caractérisé en ce que** l'énergie est prélevée d'un dispositif (8, 38, 44) local, de stockage d'énergie de préférence d'une batterie.

4. Procédé suivant l'une des revendications 1 à 3, **caractérisé en ce que** l'envoi d'énergie est effectué par chauffage permanent d'un dispositif (6) de chauffage électrique ou d'une zone active catalytique.

5. Procédé suivant l'une des revendications 1 à 4, **caractérisé en ce que** le dispositif (24) d'allumage ou de recombinaison est inséré dans une enceinte (26) de confinement d'un réacteur nucléaire.

6. Procédé suivant l'une des revendications 1 à 5, **caractérisé en ce que** la petite partie mentionnée précédemment de la surface est maintenue à une température supérieure à 50°C, de préférence supérieure à 80°C.

7. Procédé suivant l'une des revendications 3 à 6, **caractérisé en ce que** l'énergie est soutirée d'un dispositif (42) central d'alimentation en courant et, uniquement dans le cas d'un défaut de ce dispositif (42) central, d'alimentation en courant du dispositif (8, 38, 44) local de stockage d'énergie.

8. Procédé suivant l'une des revendications 1 à 7, **caractérisé en ce que** la petite partie mentionnée précédemment de la surface est maintenue, par un dispositif (50) de stockage d'énergie ayant du matériau de stockage d'énergie solide ou fluide, par l'intermédiaire d'un élément (54) de transport de chaleur, de manière permanente au niveau de température mentionné, le dispositif (50) de stockage d'énergie étant maintenu pour sa part de manière permanente dans le temps au moyen d'un dispositif de chauffage à une température plus élevée, notamment supérieure à 200°C.

9. Procédé suivant l'une des revendications 1 à 8, **caractérisé en ce que** la réaction hydrogène-oxygène est amorcée dans une cuve de sécurité d'un réacteur nucléaire.

10. Dispositif pour effectuer une réaction hydrogène-oxygène dans un dispositif d'amorçage ou de recombinaison catalytique, qui est constitué d'un certain nombre de corps (2) de catalyseur ayant une surface catalytique donnée à l'avance, **caractérisé en ce qu'**il est prévu un dispositif (6, 8, 38, 42, 44) d'alimentation en énergie, par lequel une partie de la surface catalytique présente dans l'ensemble peut être maintenue de manière permanente à un niveau de température qui est plus élevé que celui de l'atmosphère extérieur, par envoi d'énergie.

11. Dispositif suivant la revendication 10, **caractérisé en ce que** la partie maintenue à un niveau de température plus élevé représente moins de 5 % de la surface du corps (2) de catalyseur.

12. Dispositif suivant la revendication 10 ou 11, **caractérisé en ce que** le dispositif (6, 8, 38, 42, 44) d'alimentation en énergie comporte, d'une part, une source (38, 42, 44) d'énergie électrique et, d'autre part, un dispositif (6) de chauffage électrique ou une zone active catalytiquement.

13. Dispositif suivant la revendication 12, **caractérisé en ce que** le dispositif (6, 8, 44) d'alimentation en énergie comporte un dispositif (8, 44) local d'alimentation en énergie, notamment une batterie.

14. Dispositif suivant la revendication 13, **caractérisé en ce que** le dispositif (6, 8, 38, 42, 44) d'alimentation en énergie comporte un dispositif (42) central d'alimentation en courant et un commutateur (36) qui peut être actionné de sorte que, uniquement dans le cas où le dispositif (42) central d'alimentation en courant vient à être défectueux, ou passe de celui-ci au dispositif (8, 38, 44) local d'alimentation en énergie.

15. Dispositif suivant l'une des revendications 10 à 14, **caractérisé en ce que** la partie pouvant être chauffée de la surface catalytique est disposée centralement.

16. Dispositif suivant l'une des revendications 10 à 15, **caractérisé en ce qu'**au moins un conducteur (22) de la chaleur, qui est de préférence formé en métal, s'étend de la petite partie mentionnée de la surface vers une autre partie de la surface.

17. Dispositif suivant l'une des revendications 10 à 15, **caractérisé en ce que** le dispositif (42) d'alimentation en énergie comporte un dispositif (50) de stockage à matériau de stockage d'énergie fluide ou solide, lequel est lié par l'intermédiaire d'un élément (54) de transport de chaleur à ladite petite partie de la surface de manière thermique.

18. Dispositif suivant la revendication 17, **caractérisé en ce que**, pour chauffer le dispositif (54) de stockage, il est prévu un dispositif (6) de chauffage, qui est formé de préférence sous la forme d'un dispositif de chauffage à résistance électrique.

19. Dispositif suivant la revendication 17 ou 18, **caractérisé en ce que** le dispositif (50) de stockage est un dispositif de stockage de chaleur entouré par un isolant (52).

20. Dispositif suivant l'une des revendications 10 à 19, **caractérisé en ce que** le dispositif (6) de chauffage électrique est constitué d'un filament chauffé de manière permanente.

21. Dispositif suivant l'une des revendications 10 à 20, **caractérisé en ce que** le dispositif (6) de chauffage électrique est un élément thermique qui est disposé entre deux corps (2) de catalyseur voisins.

22. Dispositif suivant l'une des revendications 10 à 21, **caractérisé en ce que** l'élément (6) thermique comporte une voie conductrice de la chaleur (66), qui est disposée parallèlement au corps (2) de catalyseur formé sous la forme d'une plaque.

23. Dispositif suivant l'une des revendications 11 à 22, **caractérisé en ce que** le dispositif (6) de chauffage et le corps (2) de catalyseur sont montés dans un boîtier (24).
